# EUROPÄISCHE PATENTANMELDUNG

(11) **EP 3 412 946 A1**
(43) Veröffentlichungstag der Anmeldung: **12.12.2018**
(21) Anmeldenummer: 17400038.0
(22) Anmeldetag: 09.06.2017
(51) Int. Cl.: F16K 31/06

(54) **VERFAHREN ZUR ANSTEUERUNG EINES ELEKTROMAGNETISCHEN VENTILS UND ELEKTROMAGNETISCHES VENTIL**

(71) Anmelder: Andreas Stihl AG & Co. KG, 71336 Waiblingen (DE)
(72) Erfinder: SCHNEIDER, Michael, 70736 Fellbach (DE); MAYER, Felix, 71332 Waiblingen (DE); Dr. DEIGENDESCH, Tobias, 71522 Backnang (DE); HANNUßEK, Sebastian, 71686 Remseck (DE)
(74) Vertreter: Wasmuth, Rolf

(57) **Zusammenfassung**

Die Erfindung betrifft ein Verfahren zur Ansteuerung eines elektromagnetischen Ventils (10) mit einem Ventilsitz (16) und einem Ventilkörper (17). Über eine elektrische Antriebsspule (19) ist der Ventilkörper (17) zwischen einer ersten und der zweiten Stellung (A, B) bewegbar. Die Antriebsspule (19) ist mit einer Ansteuervorrichtung (21) verbunden, die abhängig von einer Stellgröße (S) die Antriebsspule (19) mit einer Signalfolge (38) aus Steuersignalen (28) bestromt, um den Ventilkörper (17) zu bewegen. Dabei stellt die Ansteuervorrichtung (21) abhängig von der Stellgröße (S) eine vorgegebene Signalamplitude (25) und/oder eine vorgegebene Signaldauer (26) der Steuersignale (28) ein. Nach der Erfindung ist vorgesehen, dass zumindest ein Steuersignal (28) der Signalfolge (38) mit einer über die vorgegebene Signalamplitude (25) überhöhten Amplitude (41) und/oder mit einer über die vorgegebene Signaldauer (26) verlängerten Signaldauer (46) ausgebildet wird.

## Beschreibung

Die Erfindung betrifft ein Verfahren zur Ansteuerung eines elektromagnetischen Ventils aus einem Ventilsitz und einem Ventilkörper. Der Ventilkörper ist zwischen einer ersten Stellung und einer zweiten Stellung bewegbar, wozu ein elektromechanischer Antrieb mit einer elektrischen Antriebsspule vorgesehen ist. Die elektrische Antriebsspule wird von einer Ansteuervorrichtung angesteuert, die abhängig von einer Stellgröße die Antriebsspule des elektromagnetischen Ventils mit einer Signalfolge ansteuert. Die von der Ansteuervorrichtung abgegebene Signalfolge hat eine vorgegebene Frequenz und/oder Steuersignale mit einer von der Ansteuervorrichtung vorgegebenen Signalamplitude und/oder eine von der Ansteuervorrichtung vorgegebene Signaldauer.

Aus der DE 10 2005 002 126 A1 ist eine Ansteuervorrichtung für ein Wasserventil eines Trennschleifers bekannt, die im Betrieb eines Arbeitswerkzeugs eine vom Benutzer vorgegebene Wassermenge dem Arbeitswerkzeug zuführt. Hierzu ist das Arbeitsgerät mit einem Wasserschlauch an eine Wasserversorgung angeschlossen, wobei die zugeführte Wassermenge vom Benutzer durch eine elektronische Stelleinheit vorgegeben wird. Das Signal der Stelleinheit wird an eine Ansteuervorrichtung übermittelt, die in Abhängigkeit der Stellgröße der Stelleinheit die Antriebsspule des elektromagnetischen Ventils mit einer pulsweitenmodulierten Signalfolge ansteuert. Die durch das elektromagnetische Ventil zugeführte Wassermenge kann so unabhängig von dem Druck der Wasserversorgung so eingestellt werden, dass durch die zugeführte Wassermenge eine gute Staubbindung an der Trennscheibe gewährleistet ist.

Aus der DE 102 42 816 A1 ist ein elektromagnetisches Ventil für ein Kraftstoffsystem bekannt, welches zur Zumessung einer erforderlichen Kraftstoffmenge für einen Verbrennungsmotor von einer Ansteuervorrichtung mit einer pulsweitenmodulierten Signalfolge beaufschlagt ist. Die Pulsweite der Betriebsimpulse wird von der Ansteuervorrichtung in Abhängigkeit von Betriebsparametern des Verbrennungsmotors bestimmt und über die Betriebsdauer des Verbrennungsmotors angepasst.

Unabhängig von der Verwendung eines elektromagnetischen Ventils als Wasserventil, als Kraftstoffventil oder dgl. Ventil kann es vorkommen, dass der Ventilkörper des Ventils mit dem Ventilsitz verklebt, sich verklemmt oder sonst wie schwergängig wird. Wird ein elektromagnetisches Ventil zur Einstellung eines geringen Volumenstroms mit nur kurzen Betriebsimpulsen angesteuert, kann eine Bewegung des Ventilkörpers aufgrund eines Klebens, Klemmens oder dgl. Behinderung scheitern. Der Ventilkörper führt keine Bewegung aus; der Ventilzustand bleibt trotz Bestromung der Antriebsspule unverändert. So kann es vorkommen, dass das Ventil nicht öffnet.

Der Erfindung liegt die Aufgabe zugrunde, ein Verfahren zur Ansteuerung eines elektromagnetischen Ventils anzugeben, mit dem eine dem zugeführten Steuersignal entsprechende Bewegung des Ventilkörpers sicher gewährleistet ist.

Die Aufgabe wird nach den Merkmalen des Anspruchs 1 gelöst.

Bei einer ersten Ansteuerung des elektromagnetischen Ventils ist zwischen einem "Starten" des Ventils und einem "Betrieb" des Ventils zu unterscheiden. Das elektromagnetische Ventil wird nach einer Ruhezeit zunächst funktional angesteuert, d. h. es wird ein oder mehrere Startimpulse aufgegeben, um einen eventuell schwergängigen Ventilkörper initial zu bewegen. Nach Startimpulsen wird davon ausgegangen, dass der Ventilkörper mechanisch frei ist und auch auf Betriebsimpulse reagiert, so dass das Ventil in Betrieb genommen werden kann. Der allgemeine Begriff "Steuersignale" umfasst sowohl die Startimpulse zur Sicherung der mechanischen Beweglichkeit des Ventilkörpers als auch die Betriebsimpulse zum bestimmungsgemäßen Betrieb des Ventils.

Die dem elektromagnetischen Ventil zugeführte Signalfolge aus Steuersignalen wird unabhängig von den von der Ansteuervorrichtung vorgegebenen Werten in der Frequenz, der Signalamplitude und/oder der Signaldauer überhöht. Das bedeutet, dass zumindest ein Steuersignal der Signalfolge mit einer über die vorgegebene Signalamplitude überhöhten Signalamplitude und/oder mit einer über die vorgegebene Signaldauer verlängerten Signaldauer und/oder mit einer über eine vorgegebene Frequenz überhöhten Frequenz der Signalfolge ausgebildet wird. Dadurch kann erreicht werden, dass die Antriebspule des elektromagnetischen Ventils mit einem größeren oder länger andauernden Strom bestromt wird, wodurch auf den Ventilkörper eine größere elektromagnetische Kraft ausgeübt wird. Diese größere elektromagnetische Kraft stellt sicher, dass der Ventilkörper trotz eines Verklemmens oder Verklebens sicher bewegt wird. Die Funktionsfähigkeit des Ventils ist gewährleistet. Es erfolgt keine Rückmeldung, ob der Ventilkörper sich bewegt hat oder nicht.

So kann vorteilhaft vorgesehen sein, ein Steuersignal mit um 30% bis 80% überhöhter Signalamplitude auszubilden. Die überhöhte Signalamplitude ist größer als die von der Ansteuervorrichtung vorgegebene Signalamplitude des für den Betrieb des Ventils vorgesehenen Steuersignals.

In vorteilhafter Ausbildung der Erfindung ist das Steuersignal eine Spannung, wobei die vorgegebene Signalamplitude des Steuersignals eine erste vorgegebene Spannung aufweist und die überhöhte Signalamplitude mit einer zweiten, überhöhten Spannung ausgebildet ist. Die zweite, überhöhte Spannung kann insbesondere um bis zu 80% größer sein als die erste, vorgegebene Spannung.

Alternativ oder zusätzlich kann vorgesehen sein, die vorgegebene Signaldauer des Steuersignals mit einer um 5% bis 50% längeren Signaldauer als die vorgegebene Signaldauer auszubilden. Zweckmäßig ist die verlängerte Signaldauer um 20% länger als die von der Ansteuervorrichtung für einen Betrieb des Ventils vorgegebene Signaldauer. Dadurch kann ein längeres Einwirken der elektromagnetischen Stellkraft auf den Ventilkörper gewährleistet werden, was in den meisten Fällen ausreichend ist, um einen verklemmten oder verklebten Ventilkörper initial zu bewegen.

Wird z. B. ein erstes Steuersignal in seiner überhöhten Signalamplitude signifikant größer als die vorgegebene Signalamplitude gewählt und darüber hinaus das Steuersignal mit einer längeren Signaldauer ausgebildet als die vorgegebene Signaldauer des Steuersignals, kann auch in hartnäckigen Fällen ein initiales Lösen eines verklemmten oder verklebten Ventilkörpers und damit die Funktion des elektromagnetischen Ventils sichergestellt werden.

In Weiterbildung der Erfindung wird das elektromagnetische Ventil mit mehreren aufeinander folgenden Steuersignalen angesteuert, die die Signalfolge bilden. Zweckmäßig ist die von der Ansteuervorrichtung vorgegebene Signalfolge eine pulsweitenmodulierte Signalfolge, um in Abhängigkeit der eingestellten Pulsweite den Volumenstrom durch das elektromagnetische Ventil einzustellen.

Die von der Ansteuervorrichtung vorgegebene Signalfolge zum ersten Ansteuern des elektromagnetischen Ventils besteht vorteilhaft aus Startimpulsen und Betriebsimpulsen. Als Startimpulse werden die Signale der Signalfolge bezeichnet, die das initiale Bewegen des Ventilgliedes sicherstellen sollen. Betriebsimpulse sind die Signale der Signalfolge, die im bestimmungsgemäßen Betrieb des elektromagnetischen Ventils insbesondere dessen Öffnungszeiten bzw. Schließzeiten bestimmen. Eine Signalfolge besteht somit aus Startimpulsen und Betriebsimpulsen. Die Startimpulse haben dabei eine über die vorgegebene Signalamplitude des Betriebsimpulses überhöhte Signalamplitude und/oder eine über die vorgegebene Signaldauer des Betriebsimpulses verlängerte Signaldauer und/oder eine über eine vorgegebene Frequenz der Betriebsimpulse erhöhte Frequenz. Für ein sicheres Lösen des Ventilgliedes ist als erstes Signal der Signalfolge ein Startimpuls vorgesehen. Insbesondere können zu Beginn einer Signalfolge mehrere aufeinander folgende Startimpulse vorgesehen sein. Zweckmäßig sind bis zu zehn Startimpulse. Diese in kurzer Folge aufeinander folgenden Startimpulse haben insbesondere eine höhere Frequenz, z. B. eine 0,5- bis 5fach höhere Frequenz als die Betriebsimpulse.

Die Startimpulse werden unabhängig von einer tatsächlichen Schwergängigkeit des Ventilkörpers auf die Antriebsspule gegeben. Es erfolgt auch keine Rückmeldung, ob der Ventilkörper sich auf einen Startimpuls bewegt oder nicht. In der Praxis hat sich gezeigt, dass ein vor einem Senden von Betriebsimpulsen gesendeter Startimpuls die Funktionssicherheit des Ventils erhöht.

Das erfindungsgemäße Verfahren ist insbesondere bei einem als elektromagnetisches Ventil ausgebildeten Wasserventil an einem Trennschleifer vorteilhaft anwendbar.

Das Verfahren ist gegenständlich an einem elektromagnetischen Ventil als Wasserventil in einer Wasserzuführung eines Arbeitsgerätes mit einem Arbeitswerkzeug einsetzbar. Das elektromagnetische Wasserventil weist einen Zulauf und einen Ablauf auf, wobei zwischen dem Zulauf und dem Ablauf ein Ventilsitz mit einem Ventilkörper angeordnet ist. Der Ventilkörper sperrt in einer ersten Stellung die Strömungsverbindung zwischen dem Zulauf und dem Ablauf. In einer zweiten Stellung gibt der Ventilkörper die Strömungsverbindung zwischen dem Zulauf und dem Ablauf frei. Das Wasserventil ist von einer Ansteuervorrichtung mit einer Signalfolge aus Steuersignalen angesteuert, welche das elektromagnetische Wasserventil - insbesondere unter Verwendung einer pulsweitenmodulierten Signalfolge - öffnet und schließt. Die Öffnungszeiten und/oder die Schließzeiten des Wasserventils sind über eine mit der Ansteuervorrichtung verbundene Stelleinheit vom Benutzer zu ändern. Entsprechend der an der Stelleinheit vom Benutzer eingestellten Stellgröße wird der durch das Wasserventil strömende Volumenstrom durch die Ansteuervorrichtung eingestellt, wozu das Wasserventil zum Bewegen des Ventilkörpers mit einer Signalfolge aus Steuersignalen vorgegebener Signalamplitude beaufschlagt ist. Um die Bewegung des Ventilkörpers sicherzustellen, ist vorgesehen, dass die Ansteuervorrichtung abhängig von einer Stellgröße der Stelleinheit zumindest eine vorgegebene Signalamplitude und/oder eine vorgegebene Signaldauer für die Steuersignale der Signalfolge bestimmt, wobei zumindest ein Steuersignal der Signalfolge mit einer über die vorgegebene Signalamplitude überhöhten Signalamplitude und/oder mit einer über die vorgegebene Signaldauer verlängerten Signaldauer ausgebildet wird und/oder mit einer über eine vorgegebene Frequenz der Signalfolge erhöhten Frequenz ausgebildet wird.

In einer weiteren Ausgestaltung der Erfindung ist das Verfahren bei einem elektromagnetischen Ventil als Kraftstoffventil in einem Kraftstoffsystem eines Verbrennungsmotors eines Arbeitsgerätes einsetzbar. Das elektromagnetische Kraftstoffventil weist einen Zulauf und einen Ablauf auf, wobei zwischen dem Zulauf und dem Ablauf ein Ventilsitz mit einem Ventilkörper angeordnet ist. In einer ersten Stellung des Ventilkörpers ist die Strömungsverbindung zwischen dem Zulauf und dem Ablauf gesperrt. In einer zweiten Stellung des Ventilkörpers ist die Strömungsverbindung zwischen dem Zulauf und dem Ablauf freigegeben. Das Kraftstoffventil ist von einer Ansteuervorrichtung mit einer Signalfolge aus Steuersignalen angesteuert, welche das elektrische Kraftstoffventil öffnen und schließen. Die Öffnungszeiten und/oder die Schließzeiten des Kraftstoffventils sind über die Ansteuervorrichtung bestimmt, welche Betriebsvariable wie z. B. die aktuelle Last oder eine Temperatur des Verbrennungsmotors verarbeitet und den Volumenstrom durch das Kraftstoffventil derart einstellt, dass der Verbrennungsmotor die zum Betrieb notwendige Kraftstoffmenge erhält. Hierzu ist das elektromagnetische Kraftstoffventil zum Bewegen des Ventilkörpers mit einer Signalfolge aus Steuersignalen vorgegebener Signalamplitude beaufschlagt, wobei die Signalfolge insbesondere als pulsweitenmodulierte Signalfolge gestaltet ist. Die Ansteuervorrichtung wird abhängig von zumindest einer Betriebsvariablen des Verbrennungsmotors zumindest eine vorgegebene Signalamplitude und/oder eine vorgegebene Signaldauer für die Steuersignale der Signalfolge bestimmen. Um zu gewährleisten, dass der Ventilkörper des elektromagnetischen Kraftstoffventils auch dann sicher bewegt wird, wenn der Ventilkörper leicht verklemmt oder am Ventilsitz verklebt ist, wird zumindest ein Steuersignal der Signalfolge mit einer über die vorgegebene Signalamplitude überhöhten Signalamplitude und/oder mit einer über die vorgegebene Signaldauer verlängerten Signaldauer und/oder mit einer über eine vorgegebene Frequenz der Signalfolge erhöhten Frequenz ausgebildet.

Weitere vorteilhafte Ausführungsbeispiele ergeben sich durch beliebige Kombination der Merkmale der genannten und beschriebenen Ausführungsbeispiele.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Arbeitsgerät am Beispiel eines Trennschleifers,
- Fig. 2: in schematischer Darstellung den Aufbau einer Steuereinheit für eine ventilgesteuerte Wasserzufuhr,
- Fig. 3: ein schematisches Schaltbild der ventilgesteuerten Wasserzufuhr nach Fig. 2 mit einem elektromagnetischen Ventil,
- Fig. 4: eine erste Ausführungsform einer Signalfolge aus Steuersignalen zur Ansteuerung des elektromagnetischen Ventils,
- Fig. 5: eine Darstellung einer zweiten Ausführungsform einer Signalfolge aus Steuersignalen in Form von Startimpulsen und Betriebsimpulsen, mit Darstellung des Stromverlaufs im Ventil und der Stellung des Ventilgliedes,
- Fig. 6: eine weitere Ausführungsform einer Signalfolge aus Steuersignalen zur Ansteuerung des elektromagnetischen Ventils,
- Fig. 7: eine Darstellung einer weiteren Ausführungsform einer Signalfolge aus Steuersignalen in Form von Startimpulsen und Betriebsimpulsen, mit Darstellung des Stromverlaufs im Ventil und der Stellung des Ventilgliedes,
- Fig. 8: einen Schnitt durch ein elektromagnetisches Ventil als Kraftstoffventil in einem Kraftstoffsystem.

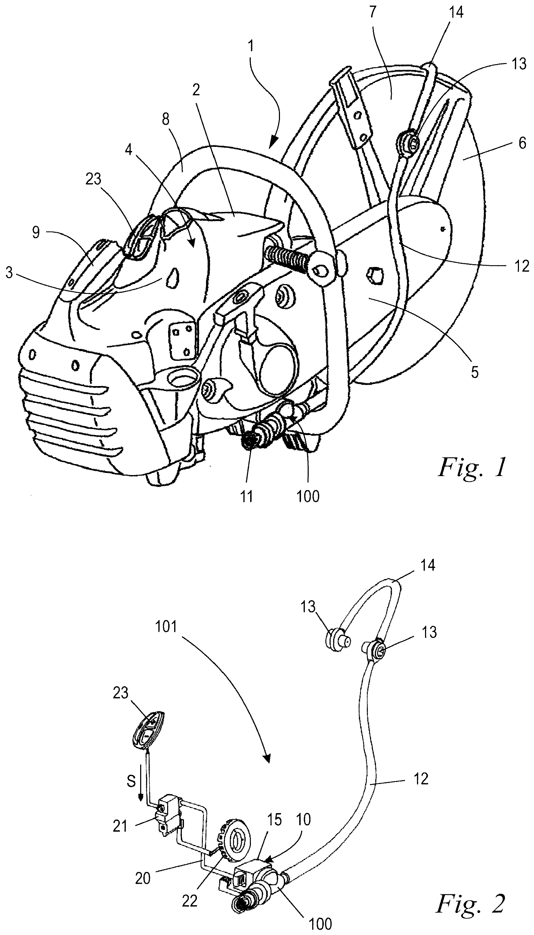

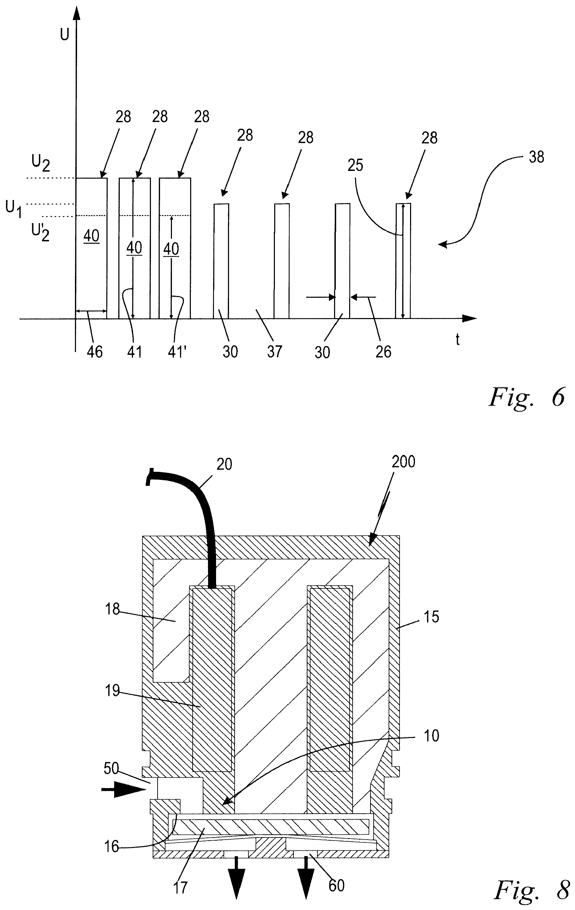

Das in Fig. 1 dargestellte Arbeitsgerät 1 ist ein Trennschleifer 2 mit einem in einem Gehäuse 3 angeordneten Verbrennungsmotor 4. Der Verbrennungsmotor 4 wird über ein nicht näher dargestelltes Kraftstoffsystem mit Kraftstoff versorgt, wobei die Zumessung des Kraftstoffs über ein elektromagnetisches Ventil 10 in Form eines Kraftstoffventils 200 (Fig. 8) zugemessen wird.

Der Verbrennungsmotor treibt über einen in einem Ausleger 5 aufgenommenen Antrieb ein Arbeitswerkzeug 6 in Form einer Trennscheibe an. Die Trennscheibe ist von einer Schutzhaube 7 über einen Umfangswinkel von mehr als 180° bis zu 270° umgeben. Das Arbeitsgerät 1 ist durch einen vorderen Bügelgriff 8 sowie einen hinteren, oberen Handgriff 9 zu tragen und zu führen.

Am Arbeitsgerät 1 ist eine Wasserzufuhr 101 (Fig. 2) angeordnet, die einen Wasseranschluss 11 umfasst, der im gezeigten Ausführungsbeispiel im unteren Bereich des Bügelgriffs 8 vorgesehen ist. Der Wasseranschluss 11 speist einen Wasserzulauf 12, der über Zulaufdüsen 13 dem Arbeitswerkzeug 6 Wasser zuführt. Die Zulaufdüsen 13 sind beidseitig des Arbeitswerkzeugs 6 bzw. der Trennscheibe in der Schutzhaube 7 gehalten (Fig. 2) und über eine Verbindungsleitung 14 miteinander verbunden.

Der Wasseranschluss 11 ist zur Verbindung mit einer Wasserversorgung über einen Wasserschlauch vorgesehen, der mittels einer geeignet ausgebildeten Anschlusskupplung an dem Wasseranschluss 11 anzuschließen ist. Der Wasserschlauch kann an ein übliches Trinkwassernetz angeschlossen werden. Der Wasserdruck liegt zweckmäßig im Bereich zwischen 1 bar und 5 bar.

Zwischen dem Wasseranschluss 11 und dem Wasserzulauf 12 ist ein elektromagnetisches Ventil 10 als Wasserventil 100 angeordnet, welches in einem Ventilgehäuse 15 aufgenommen ist.

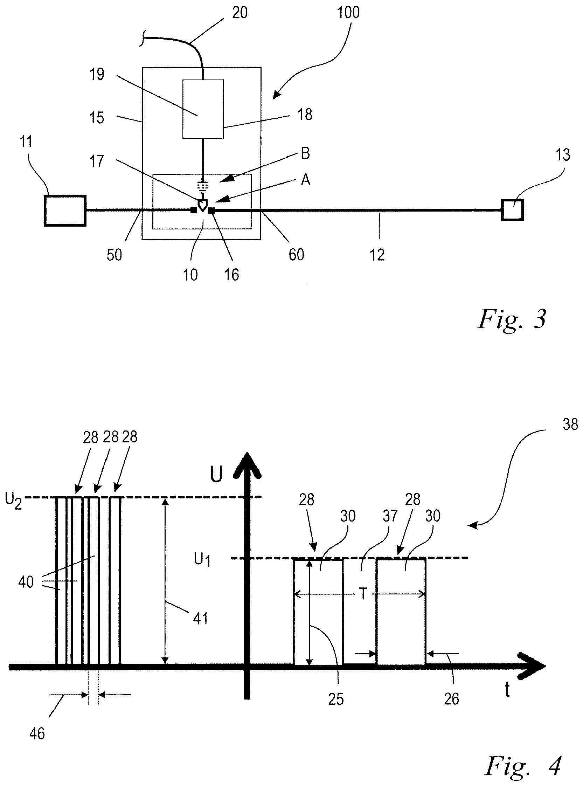

Wie Fig. 3 zeigt, umfasst das elektromagnetische Ventil 10 einen Ventilsitz 16 und einen Ventilkörper 17. Der Ventilkörper 17 ist zwischen einer ersten Stellung A und einer zweiten Stellung B bewegbar. In Fig. 3 ist die erste Stellung A die Schließstellung des Ventils 10. Die zweite Stellung B ist die Offenstellung des Ventils 10 und durch den strichlierten Ventilkörper 17 angedeutet. Der Ventilkörper 17 ist mechanisch mit einem elektromagnetischen Antrieb 18 gekoppelt, der eine elektrische Antriebsspule 19 aufweist.

Wie ferner die schematische Darstellung nach Fig. 2 zeigt, ist die elektrische Antriebsspule 19 des elektromagnetischen Antriebs 18 über eine elektrische Steuerleitung 20 mit einer Ansteuervorrichtung 21 verbunden. Die Ansteuervorrichtung 21 wird von einem Generator 22 mit elektrischer Energie gespeist. Die Ansteuervorrichtung 21 steht ferner mit einer Stelleinheit 23 in Verbindung, über die - wie mit einem Pfeil angedeutet - der Ansteuervorrichtung 21 eine Stellgröße S vorgegeben wird.

Die Stellgröße S kann z. B. ein numerischer Wert zwischen vorteilhaft 1 und 10 sein. Entsprechend dem Wert der Stellgröße S gibt die Ansteuervorrichtung 21 an die elektrische Antriebsspule 19 über die Steuerleitung 20 eine Signalfolge 38 (Fig. 4) an Steuersignalen 28 aus, die das Öffnen bzw. Schließen des elektromagnetischen Ventils 10 bewirken.

Hat der numerische Wert der Stellgröße S z. B. den Wert '5', wird die Signalfolge 38 aus Steuersignalen 28 durch die Ansteuervorrichtung 21 insbesondere pulsweitenmoduliert angepasst. Die Schaltstufen des numerischen Wertes sind bei einem Wasserventil so abgestimmt, dass bei unterschiedlichen Wasserdrücken immer eine Schaltstufe einstellbar ist, bei der die über das Wasserventil 100 zugeführte Wassermenge eine optimale Staubbindung an der Trennscheibe ermöglicht.

Die Ansteuerung des elektromagnetischen Ventils 10 gemäß der Erfindung ist beispielhaft in den Fig. 4 bis 7 wiedergegeben. Die dargestellten Steuersignale 28 bilden eine Signalfolge 38. Die Steuersignale 28 sind als Betriebsimpulse 30 und als Startimpulse 40 ausgebildet.

Die folgenden Definitionen gelten in der Beschreibung:
- Eine Signalfolge 38 ist durch aufeinander folgende Steuersignale 28 bestimmt, unabhängig von deren individueller Ausbildung.
- Als Steuersignale 28 werden gleichermaßen Betriebsimpulse 30 und Startimpulse 40 verstanden.
- Eine vorgegebene Signalamplitude 25 ist die von der Ansteuervorrichtung 21 vorgegebene Signalamplitude 25 des Steuersignals 28 zur Ansteuerung des Ventils 10 im Betriebsmodus. Das Steuersignal 28 bildet im Betriebsmodus einen Betriebsimpuls 30.
- Eine überhöhte Signalamplitude 41 ist eine Signalamplitude eines Steuersignals 28, die größer ist als die von der Ansteuervorrichtung 21 vorgegebene Signalamplitude 25 zum Betrieb des Ventils 10. Ein Steuersignal 28 mit überhöhter Signalamplitude 41 bildet einen Startimpuls 40.

Die in Fig. 4 auf der rechten Seite des Diagramms dargestellten Betriebsimpulse 30 der Signalfolge 38 haben eine von der Ansteuervorrichtung 21 vorgegebene Signalamplitude 25 und eine von der Ansteuervorrichtung 21 vorgegebene Signaldauer 26. Insbesondere haben die dargestellten Betriebsimpulse 30 der Signalfolge 38 auch eine vorgegebene Frequenz. Die Betriebsimpulse 30 werden zur Ansteuerung des elektromagnetischen Ventils 10 von der Ansteuervorrichtung 21 entsprechend einer vorgegebenen Stellgröße S an die Antriebsspule 19 (Fig. 3) abgegeben. Die Betriebsimpulse 30 bestimmen die von der Ansteuervorrichtung 21 bestimmten Öffnungszeiten 24 und Schließzeiten 27 im Betrieb des Ventils 10.

Gemäß der Erfindung ist vorgesehen, vor dem Senden von Betriebsimpulsen 30 an die elektrische Antriebsspule 19 des Antriebs 18 Startimpulse 40 zu senden, wie dies z. B. in Fig. 4 dargestellt ist. Durch die Startimpulse 40 soll ein initiales Bewegen eines verklebten, verklemmten oder schwergängigen Ventilkörpers 17 bewirkt werden.

Die Ansteuervorrichtung 21 wird im Ausführungsbeispiel nach Fig. 4 vor dem Aussenden von Betriebsimpulsen 30 vorgegebener Signalamplitude 25 und vorgegebener Signaldauer 26 mehrere Startimpulse 40 aussenden, deren überhöhte Signalamplitude 41 größer, insbesondere mehr als 30% größer ist als die vorgegebene Signalamplitude 25 des Betriebsimpulses 30. Wie insbesondere Fig. 4 zeigt, hat der Betriebsimpuls 30 eine Spannung U₁ mit der vorgegebenen Signalamplitude 25, während der Startimpuls 40 eine Spannung U₂ mit signifikant überhöhter Signalamplitude 41 aufweist. Insbesondere kann die überhöhte Signalamplitude 41 des Startimpulses 40 mehrfach, insbesondere 1,2- bis 3fach größer sein als die vorgegebene Signalamplitude 25 des Betriebsimpulses 30. Vorteilhaft ist vorgesehen, die Spannung U₂ der überhöhten Signalamplitude 41 des Startimpulses 40 um bis zu 80% größer zu wählen als die Spannung U₁ der vorgegebenen Signalamplitude 25 des Betriebsimpulses 30. Vorteilhaft ist die überhöhte Signalamplitude 41 des Startimpulses 40 zumindest 15% bis 80% größer als die vorgegebene Signalamplitude 25 des Betriebsimpulses 30. In vorteilhafter Ausgestaltung ist die überhöhte Signalamplitude 41 des Startimpulses 40 um 30% bis 50% größer als die vorgegebene Signalamplitude 25 des Betriebsimpulses 30.

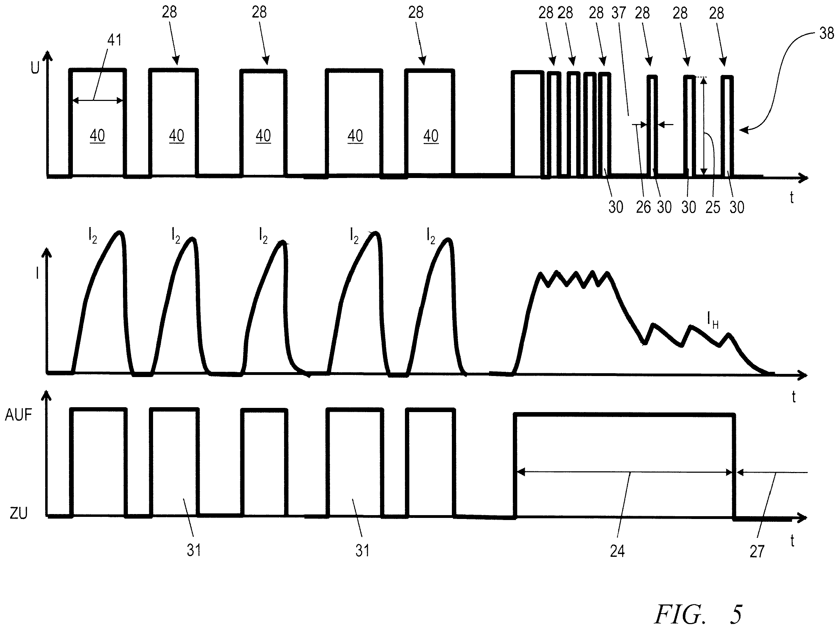

Die Folge der Betriebsimpulse 30 hat eine Periodendauer T. Die Betriebsimpulse 30 können in der Signaldauer 26 geändert werden, so dass sich zwischen zwei Betriebsimpulsen 30 Signalpausen 37 einstellen. Derartige Betriebsimpulse 30 einer Signalfolge werden auch als in der Pulsweite modulierte Signale bezeichnet. Die Abfolge der Betriebsimpulse 30 mit dazwischen ausgebildeten Signalpausen 37 bestimmen die Öffnungszeiten 24 und Schließzeiten 27 (Fig. 5) des elektromagnetischen Ventils 10 und damit den zugeführten Volumenstrom, im Ausführungsbeispiel eine zugeführte Wassermenge.

In Fig. 5 ist eine Ausführungsform der Signalfolge 38 dargestellt, bei der vor dem Senden von Betriebsimpulsen 30 mehrere, insbesondere fünf Startimpulse 40 mit einer um 5% bis 50% längeren Signaldauer 46 als die vorgegebene Signaldauer 26 eines vorgegebenen Betriebsimpulses 30 gesendet werden. Dadurch wird sichergestellt, dass ein eventuell verklebter oder verklemmter Ventilkörper 17 des Ventils 10 initial bewegt wird, um dann entsprechend der Signaldauer 26 der Betriebsimpulse 30 der Signalfolge 38 bewegt zu werden.

Die Startimpulse 40 mit einer längeren Signaldauer 46 bewirken einen erhöhten Betriebsstrom 32 mit einer Stromstärke I₂, wodurch der Ventilkörper 17 mit einer erhöhten Stellkraft initial bewegt wird. Als Antwort öffnet und schließt das Ventil 10 mehrfach für kurze Öffnungszeiten 31. Nach den Startimpulsen 40 wird die Ansteuervorrichtung 21 zur Einstellung des Volumenstroms durch das Ventil 10 Betriebsimpulse 30 auf die Antriebsspule 19 ausgeben. Die Betriebsimpulse 30 sind so gewählt, dass nach Öffnen des Ventils 10 die Signalpausen 37 größer werden, da bei geöffnetem Ventil 10 der notwendige Haltestrom I_{H} kleiner werden kann. Bleiben Betriebsimpulse 30 aus, schließt das Ventil 10.

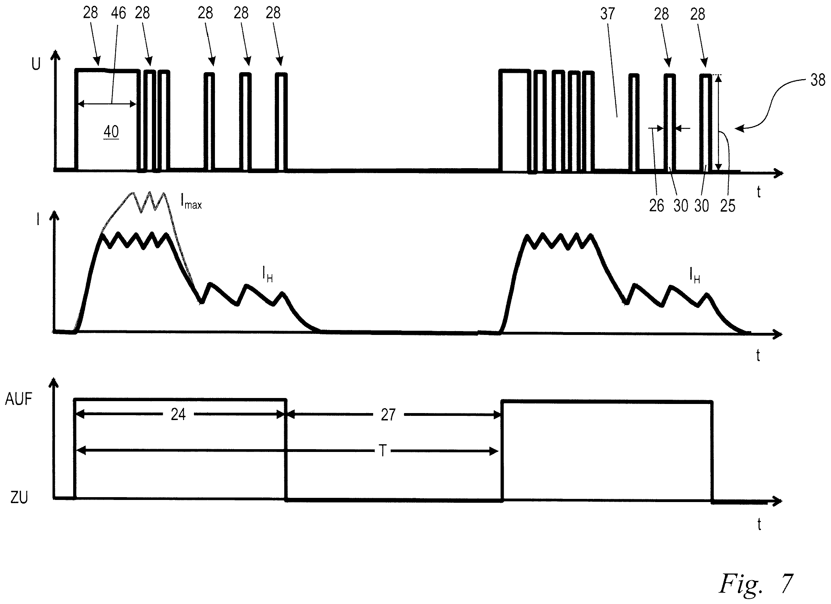

Den Betriebsimpulsen 30 zur Steuerung des Ventils 10 kann zumindest ein Startimpuls 40 vorangestellt sein, der ein erstes Steuersignal 28 der Signalfolge 38 bildet, wie in den Fig. 6 und 7 gezeigt. An den Startimpuls 40 schließen unmittelbar Betriebsimpulse 30 zum Betrieb des Ventils an. Das als Startimpuls 40 ausgebildete erste Steuersignal 28 kann eine erhöhte Signalamplitude 40 und/oder eine längere Signaldauer 46 aufweisen. In Fig. 6 sind den Betriebsimpulsen 30 jeweils drei Startimpulse 30 vorangestellt.

Es kann - wie in Fig. 7 dargestellt - auch vorteilhaft sein, die Signaldauer 46 eines ersten vorangestellten Startimpulses 40 länger auszubilden als die Signaldauer 26 eines folgenden Betriebsimpulses 30. Zweckmäßig ist ein Startimpuls 40 mit längerer Signaldauer 46 einer Folge aus Betriebsimpulsen 30 mit einer Signaldauer 26 vorangestellt.

Vorteilhaft weist der Startimpuls 40 eine überhöhte Signalamplitude 41 auf, deren Spannung U₂ größer ist als die Spannung U₁ der vorgegebenen Signalamplitude 25 eines Betriebsimpulses 30. Es kann ausreichend sein, die Signalamplitude 41' mit einer Spannung U'₂ kleiner auszuführen als die Spannung U₁ des Betriebsimpulses. Zweckmäßig ist die Spannung U'₂ nur geringfügig kleiner als die Spannung U₁ des Betriebsimpulses 30. Vorteilhaft ist die Spannung U'₂ 10% bis 25% kleiner als die Spannung U₁ des Betriebsimpulses 30.

In Fig. 7 ist eine Signalfolge 38 dargestellt, deren erstes Steuersignal 28 ein Startimpuls 40 ist und mit einer längeren Signaldauer 46 ausgebildet ist als folgende Betriebsimpulse 30.

Der in der verlängerten Signaldauer 46 länger als die vorgegebene Signaldauer 26 der Betriebsimpulse 30 ausgebildete Startimpuls 40 führt in der Antriebsspule 19 des elektromagnetischen Ventils 10 zu einem überhöhten Strom Iₘₐₓ und damit zu einer erhöhten elektromagnetischen Stellkraft auf den Ventilkörper 17. Der erhöhte Strom Iₘₐₓ stellt ein sicheres Öffnen des Ventils 10 sicher. In besonderer Ausgestaltung der Erfindung leitet der Startimpuls 40 zugleich die Öffnungszeit 24 des in Betrieb genommenen Ventils 10 ein. Auf den Startimpuls 40 folgende Betriebsimpulse 30 halten das Ventil 10 offen, was mit einem nur geringen Haltestrom I_{H} möglich ist. Die Betriebsimpulse 30 sind so moduliert, dass nach Öffnen des Ventils 10 die Signalpausen 37 größer werden, so dass der bei offenem Ventil 10 geringere Haltestrom I_{H} gehalten werden kann. Bleiben Betriebsimpulse 30 aus, schließt das Ventil 10. Es ergibt sich eine Schließzeit 27 bis zu einem erneuten Öffnen des Ventils 10.

In den Figuren 1 bis 3 ist das elektromagnetische Ventil 10 als Wasserventil 100 in der Wasserzufuhr 101 eines Arbeitsgerätes 1 mit einem Arbeitswerkzeug 6 vorgesehen. Das elektromagnetische Ventil 10 weist einen Zulauf 50 und einen Ablauf 60 auf (Fig. 3). Zwischen dem Zulauf 50 und dem Ablauf 60 ist der Ventilsitz 16 mit einem Ventilkörper 17 vorgesehen. In der ersten Stellung A des Ventils 10 sperrt der Ventilkörper 17 die Strömungsverbindung zwischen dem Zulauf 50 und dem Ablauf 60. In der zweiten Stellung B gibt der Ventilkörper 17 (strichlierte Darstellung) die Strömungsverbindung zwischen dem Zulauf 50 und dem Ablauf 60 frei. Zur Zumessung einer ausreichenden Wassermenge zum Arbeitswerkzeug 6, im Ausführungsbeispiel zur Trennscheibe, wird das Ventil 10 von der Ansteuervorrichtung 21 angesteuert, welche das elektromagnetische Ventil 10 mit einer pulsweitenmodulierten Signalfolge 38 öffnet und schließt. Die Öffnungszeiten 24 und/oder die Schließzeiten 27 des Ventils 10 werden von der Ansteuervorrichtung 21 in Abhängigkeit einer Stellgröße S eingestellt, die vom Benutzer über eine Stelleinheit 23 vorgegeben wird. Die Stelleinheit 23 liegt, wie Fig. 1 zeigt, bevorzugt auf der linken Seite des Handgriffs 9 und kann so von einem Benutzer, der mit der rechten Hand den Handgriff 9 greift, mit seinem Daumen bedient werden.

Entsprechend der vom Benutzer vorgegebenen Stellgröße S wird die Ansteuervorrichtung 21 eine pulsweitenmodulierte Signalfolge 38 von Betriebsimpulsen 30 abgeben, wodurch der Volumenstrom durch das Ventil 10 eingestellt ist. Um einen sicheren Betrieb des elektromagnetischen Ventils 10 zu gewährleisten, wird zu Beginn einer Signalfolge 38 und/oder mit einem ersten Betriebsimpuls 30 ein Startimpuls 40 aufgegeben. Dieser Startimpuls kann eine überhöhte Signalamplitude 41 haben, die signifikant größer ist als die vorgegebene Signalamplitude 25 des Betriebsimpulses 30. Bevorzugt ist die überhöhte Signalamplitude 41 des Startimpulses 40 um 30% bis 80% höher als die vorgegebene Signalamplitude 25 des Betriebsimpulses 30. Es kann, wie vorstehend ausgeführt, auch zweckmäßig sein, den Startimpuls 40 mit einer über die vorgegebene Signaldauer 26 des Betriebsimpulses 30 verlängerten Signaldauer 46 auszubilden. Auch ist vorteilhaft, Startimpulse 40 mit einer höheren Frequenz als die vorgegebene Frequenz der Folge von Betriebsimpulsen 30 auszubilden.

Insbesondere bei jedem Betätigen der Stelleinheit 23 für das Wasserventil 100 wird den Betriebsimpulsen 30 zumindest ein Startimpuls 40 vorangestellt, vorteilhaft werden mehrere Startimpulse 40 vorangestellt. Die Startimpulse 40 werden unabhängig von Betriebsvariablen eines Antriebsmotors des Arbeitsgerätes 1, z. B. einem Verbrennungsmotor 4, auf die Antriebsspule 19 aufgeschaltet. Es kann zweckmäßig sein, bei jeder Inbetriebnahme des Arbeitsgerätes 1 die Antriebsspule 19 des elektromagnetischen Ventils 10 zunächst mit einem oder mehreren Startimpulsen 40 zu beaufschlagen.

Das erfindungsgemäße Verfahren zur Ansteuerung eines elektromagnetischen Ventils ist nicht nur in Verbindung mit einem Wasserventil 100 bei einem Arbeitsgerät 1 vorteilhaft einsetzbar.

Das erfindungsgemäße Verfahren ist auch bei einem elektromagnetischen Ventil 10 als Kraftstoffventil 200 (Fig. 8) in einem Kraftstoffsystem eines Verbrennungsmotors 4 eines Arbeitsgerätes 1 anwendbar. Das elektromagnetische Kraftstoffventil 200 weist einen Zulauf 50 und einen Ablauf 60 auf. Zwischen dem Zulauf 50 und dem Ablauf 60 ist ein Ventilsitz 16 vorgesehen, dem ein Ventilkörper 17 zugeordnet ist. In einer ersten Stellung wird die Strömungsverbindung zwischen dem Zulauf 50 und dem Ablauf 60 gesperrt; in einer zweiten Stellung des Kraftstoffventils 200 wird die Strömungsverbindung zwischen dem Zulauf 50 und dem Ablauf 60 freigegeben, so wie dies in Fig. 9 dargestellt ist. Das Kraftstoffventil 200 ist von einer Ansteuervorrichtung 21 mit einer Signalfolge 38 angesteuert, welche das elektromagnetische Kraftstoffventil 200 öffnet und schließt. Die Öffnungszeiten 24 und/oder die Schließzeiten 27 des Kraftstoffventils 200 sind über die Ansteuervorrichtung 21 bestimmt, die Betriebsvariable des Verbrennungsmotors 4 verarbeitet. Dies erfolgt derart, dass der das Kraftstoffventil 200 durchströmende Volumenstrom an Kraftstoff einstellbar ist, wobei das elektromagnetische Kraftstoffventil 200 zum Bewegen des Ventilkörpers 17 mit der Signalfolge 38 aus Betriebsimpulsen 30 vorgegebener Signalamplitude 26 beaufschlagt ist, wie sie in den Figuren 4 bis 7 gezeigt sind. Zu Beginn einer Signalfolge 38 oder mit einem ersten Betriebsimpuls 30 wird ein Startimpuls 40 aufgegeben, dessen überhöhte Signalamplitude in einem ersten Ausführungsbeispiel um 30% bis 80% größer ist als die vorgegebene Signalamplitude 25 des Betriebsimpulses 30.

So kann die maximale vorgegebene Signalamplitude 25 des Betriebsimpulses 30 eine Spannung U₁ haben, die in der Antriebsspule 19 einen Betriebsstrom von vorteilhaft 1,1 Ampere bewirkt. Die überhöhte Signalamplitude 41 des Startimpulses 40 hat bevorzugt eine Spannung U₂, die in der Antriebsspule 19 einen erhöhten Betriebsstrom von vorteilhaft z. B. 1,8 Ampere bewirkt. Die überhöhte Signalamplitude 41 des Startimpulses 40 ist um etwa 60% größer als die vorgegebene Signalamplitude 25 des Betriebsimpulses 30.

Es kann, wie vorstehend ausgeführt, auch zweckmäßig sein, den Startimpuls 40 mit einer über die vorgegebene Signaldauer 26 des Betriebsimpulses 30 verlängerten Signaldauer 46 auszubilden. Auch ist es vorteilhaft, Startimpulse 40 mit einer höheren Frequenz als die vorgegebene Frequenz der Folge von Betriebsimpulsen 30 auszubilden.

Die Startimpulse 40 werden unabhängig von Betriebsvariablen des Verbrennungsmotors 4 wie Last, Temperatur, Drehzahl oder dgl. auf die Antriebsspule 19 aufgeschaltet. Insbesondere kann bei jeder ersten Inbetriebnahme des Arbeitsgerätes 1 die Antriebsspule 19 des elektromagnetischen Kraftstoffventils 200 zunächst mit einem oder mehreren Startimpulsen 40 beaufschlagt werden.

Die verschiedenen Merkmale der Erfindung sind anhand unterschiedlicher Ausführungsbeispiele erläutert; alle beschriebenen und dargestellten Merkmale können - ohne den Gedanken der Erfindung zu verlassen - untereinander beliebig kombiniert werden.

## Patentansprüche

1. Verfahren zur Ansteuerung eines elektromagnetischen Ventils (10) mit einem Ventilsitz (16) und einem Ventilkörper (17), wobei der Ventilkörper (17) zwischen einer ersten Stellung (A) und einer zweiten Stellung (B) bewegbar ist,
und mit einer elektrischen Antriebsspule (19) zum elektromechanischen Antrieb des Ventilkörpers (17) zwischen der ersten und der zweiten Stellung (A, B),
sowie mit einer elektrischen Ansteuervorrichtung (21), die mit der Antriebsspule (19) des elektromagnetischen Ventils (10) verbunden ist, und die Ansteuervorrichtung (21) in Abhängigkeit von einer Stellgröße (S) die Antriebsspule (19) mit einer Signalfolge (38) aus Steuersignalen (28) bestromt, um den Ventilkörper (17) zwischen der ersten Stellung (A) und der zweiten Stellung (B) zu bewegen,
wobei die Ansteuervorrichtung (21) abhängig von der Stellgröße (S) zumindest eine vorgegebene Signalamplitude (25) und/oder eine vorgegebene Signaldauer (26) für die Steuersignale (28) der Signalfolge (38) und/oder eine vorgegebene Frequenz der Signalfolge (38) bestimmt,
**dadurch gekennzeichnet,**
**dass** zumindest ein Steuersignal (28) der Signalfolge (38) mit einer über die vorgegebene Signalamplitude (25) überhöhten Signalamplitude (41) und/oder mit einer über die vorgegebene Signaldauer (26) verlängerten Signaldauer (46) und/oder mit einer über eine vorgegebene Frequenz der Signalfolge (38) erhöhten Frequenz ausgebildet wird.

2. Verfahren nach Anspruch 1,
**dadurch gekennzeichnet, dass** die überhöhte Amplitude (41) des Steuersignals (28) um 30% bis 80% größer ist als die vorgegebene Signalamplitude (25) des Steuersignals (28).

3. Verfahren nach Anspruch 1,
**dadurch gekennzeichnet, dass** die vorgegebene Signalamplitude (25) des Steuersignals (28) eine erste vorgegebene Spannung (U₁) aufweist und die überhöhte Signalamplitude (41) eine zweite Spannung (U₂) aufweist.

4. Verfahren nach Anspruch 3,
**dadurch gekennzeichnet, dass** die zweite Spannung (U₂) um bis zu 80% größer ist als die erste Spannung (U₁).

5. Verfahren nach Anspruch 1,
**dadurch gekennzeichnet, dass** die verlängerte Signaldauer (46) um 5% bis 50% länger ist als die vorgegebene Signaldauer (26) eines vorgegebenen Steuersignals (28).

6. Verfahren nach Anspruch 5,
**dadurch gekennzeichnet, dass** die verlängerte Signaldauer (46) um 20% länger ist als die vorgegebene Signaldauer (26) des vorgegebenen Steuersignals (28).

7. Verfahren nach Anspruch 1,
**dadurch gekennzeichnet, dass** die Steuersignale (28) der Signalfolge (38) in der Signaldauer (26) modulierte Signale sind.

8. Verfahren nach Anspruch 1,
**dadurch gekennzeichnet, dass** die Steuersignale (28) zum ersten Ansteuern des elektromagnetischen Ventils (10) aus Startimpulsen (40) und Betriebsimpulsen (30) bestehen.

9. Verfahren nach Anspruch 8,
**dadurch gekennzeichnet, dass** ein Startimpuls (40) ein erstes Steuersignal (28) der Signalfolge (38) ist.

10. Verfahren nach Anspruch 9,
**dadurch gekennzeichnet, dass** zu Beginn einer Signalfolge (38) mehrere aufeinanderfolgende Startimpulse (40) vorgesehen sind.

11. Verfahren nach Anspruch 10,
**dadurch gekennzeichnet, dass** bis zu zehn Startimpulse (40) aufeinander folgen.

12. Verfahren nach Anspruch 1,
**dadurch gekennzeichnet, dass** das elektromagnetische Ventil (10) ein Wasserventil (100) an einem Trennschleifer ist.

13. Elektromagnetisches Ventil als Wasserventil (100) in einer Wasserzuführung (101) eines Arbeitsgerätes (1) mit einem Arbeitswerkzeug (6), wobei das elektromagnetische Wasserventil (100) einen Zulauf (50) und einen Ablauf (60) aufweist, und zwischen dem Zulauf (50) und dem Ablauf (60) ein Ventilsitz (16) mit einem Ventilkörper (17) angeordnet ist, und der Ventilkörper (17) in einer ersten Stellung (A) die Strömungsverbindung zwischen dem Zulauf (50) und dem Ablauf (60) sperrt, und in einer zweiten Stellung (B) die Strömungsverbindung zwischen dem Zulauf (50) und dem Ablauf (60) freigibt, wobei das Wasserventil (100) von einer Ansteuervorrichtung (21) mit einer Signalfolge (38) aus Steuersignalen (28) angesteuert ist, welche das elektromagnetische Wasserventil (100) öffnet und schließt, und die Öffnungszeiten und/oder Schließzeiten des Wasserventils (100) über eine mit der Ansteuervorrichtung (21) verbundene Stelleinheit (23) zu ändern sind, derart, dass der das Wasserventil (100) durchströmende Volumenstrom einstellbar ist, wobei das elektromagnetische Wasserventil (100) zum Bewegen des Ventilkörpers (17) mit einer Signalfolge (38) aus Steuersignalen (33, 34, 35, 36) vorgegebener Signalamplitude (25) beaufschlagt ist, wobei die Ansteuervorrichtung (21) abhängig von einer Stellgröße (S) der Stelleinheit (23) zumindest eine vorgegebene Signalamplitude (25) und/oder eine vorgegebene Signaldauer (26) für die Steuersignale (28) der Signalfolge (38) bestimmt, wobei zumindest ein Steuersignal (28) der Signalfolge (38) mit einer über die vorgegebene Signalamplitude (25) überhöhten Signalamplitude (41) und/oder mit einer über die vorgegebene Signaldauer (26) verlängerten Signaldauer (46) ausgebildet ist und/oder mit einer über eine vorgegebene Frequenz der Signalfolge (3 8) erhöhten Frequenz ausgebildet wird.

14. Elektromagnetisches Ventil als Kraftstoffventil (200) in einem Kraftstoffsystem eines Verbrennungsmotors (4) eines Arbeitsgerätes (1), wobei das elektromagnetische Kraftstoffventil (200) einen Zulauf (50) und einen Ablauf (60) aufweist, und zwischen dem Zulauf (50) und dem Ablauf (60) ein Ventilsitz (16) mit einem Ventilkörper (17) angeordnet ist, und der Ventilkörper (17) in einer ersten Stellung (A) die Strömungsverbindung zwischen dem Zulauf (50) und dem Ablauf (60) sperrt, und in einer zweiten Stellung (B) die Strömungsverbindung zwischen dem Zulauf (50) und dem Ablauf (60) freigibt, wobei das Kraftstoffventil (200) von einer Ansteuervorrichtung (21) mit einer Signalfolge (38) aus Steuersignalen (28) angesteuert ist, welche das elektromagnetische Kraftstoffventil (200) öffnet und schließt, und die Öffnungszeiten und/oder Schließzeiten des Kraftstoffventils (200) über die Ansteuervorrichtung (21) bestimmt sind, wobei die Ansteuervorrichtung (21) Steuervariable des Verbrennungsmotors (4) verarbeitet, derart, dass der das Kraftstoffventil (200) durchströmende Volumenstrom einstellbar ist, und das elektromagnetische Kraftstoffventil (200) zum Bewegen des Ventilkörpers (17) mit einer Signalfolge (38) aus Steuersignalen (28) beaufschlagt ist, wobei die Ansteuervorrichtung (21) abhängig von zumindest einer Betriebsvariablen des Verbrennungsmotors (2) zumindest eine vorgegebene Signalamplitude (25) und/oder eine vorgegebene Signaldauer (26) für die Steuersignale (28) der Signalfolge (38) bestimmt, und zumindest ein Steuersignal (28) der Signalfolge (38) mit einer über die vorgegebene Signalamplitude (25) überhöhten Signalamplitude (41) und/oder mit einer über die vorgegebene Signaldauer (26) verlängerten Signaldauer (46) ausgebildet und/oder mit einer über eine vorgegebene Frequenz der Signalfolge (28) erhöhten Frequenz ausgebildet wird.
